# EUROPÄISCHE PATENTSCHRIFT

(11) **EP 1 107 447 B1**
(45) Veröffentlichungstag und Bekanntmachung des Hinweises auf die Patenterteilung: **23.12.2009**
(21) Anmeldenummer: 00123899.7
(22) Anmeldetag: 03.11.2000
(51) Int. Cl.: H02P 6/18, H02P 6/22

(54) **Elektonisch kommutierter Gleichstrommotor**
Electrically commutated DC-motor
Moteur à courant continu à communication électronique

(30) Priorität: 08.12.1999 DE 29921580 U
(43) Veröffentlichungstag der Anmeldung: 13.06.2001
(73) Patentinhaber: ebm-papst St. Georgen GmbH & Co. KG, 78112 St. Georgen (DE)
(72) Erfinder: Schmider, Fritz, 78132 Hornberg (DE); Lukenich, Stefan, 78224 Singen (DE)
(74) Vertreter: Raible, Hans

(56) Entgegenhaltungen:
- EP-A- 0 957 570
- DE-A- 2 311 398
- DE-A- 19 518 991

## Beschreibung

Die Erfindung betrifft einen elektronisch kommutierten Gleichstrommotor. Derartige Motoren werden u.a. zum Antrieb kleiner Lüfter verwendet, vgl. die EP-A1-0 908 630. Aus verschiedenen Gründen kann es wünschenswert sein, einen solchen Motor ohne Hallgenerator zu betreiben, also ihn mit der Spannung zu kommutieren, die im Betrieb vom Rotor in der Statorwicklung induziert wird.

Das Dokument EP-A-0957570 offenbart einen elektronisch kommutierter Motor,
mit einem permanentmagnetischen Rotor und
mit einem Stator, welcher Stator zwei Wicklungsstränge aufweist, wobei dem einen Wicklungsstrang über einen zugeordneten ersten Halbleiterschalter Strom zugeführt wird, dem anderen Wicklungsstrang über einen zugeordneten zweiten Halbleiterschalter Strom zugeführt wird, und
mit einer Kommutierungsvorrichtung zum Einschalten des ersten Halbleiterschalters und des zweiten Halbleiterschalters.

Es ist deshalb eine Aufgabe der Erfindung, einen neuen elektronisch kommutierten Motor bereitzustellen.

Nach der Erfindung wird diese Aufgabe gelöst durch einen Motor gemäß Patentanspruch 1. Bei der Erfindung verwendet man also zum Steuern des Stromes im Motor einen bistabilen Multivibrator, dessen Schaltzustand über mindestens einen Komparator gesteuert wird. Der Komparator wird seinerseits durch die Spannung gesteuert, die vom permanentmagnetischen Rotor in einem im Augenblick stromlosen Wicklungsstrang induziert wird. Durch den Wegfall eines separaten Rotorstellungssensors hat ein solcher Motor einen einfachen Aufbau bei gutem Wirkungsgrad, da der Stromverbrauch für einen Rotorstellungssensor entfällt. Die Erfindung ist deshalb besonders vorteilhaft für Klein- und Kleinstmotoren, bei denen der Stromverbrauch eines Rotorstellungssensors, z.B. eines Hall-lC, den elektrischen Wirkungsgrad stark reduzieren würde, und sie eignet sich z.B. sehr gut für Motoren, bei denen die elektronischen Komponenten vom eigentlichen Motor (Stator mit Statorwicklung, und Rotor) getrennt angeordnet sind.

Eine andere Lösung der gestellten Aufgabe, welche einen besonders sicheren Anlauf ergibt, ist Gegenstand des Anspruchs 14. Dabei ergibt sich eine sehr vorteilhafte Weiterbildung durch den Gegenstand des Anspruchs 15, da dann trotz der unterschiedlichen Widerstände der Wicklungsstränge im Betrieb in beiden Wicklungssträngen derselbe Strom fließt, so dass der Motor nicht "hinkt". (Ohne diese Maßnahme würden in den beiden Wicklungssträngen im Betrieb unterschiedlich große Ströme fließen.) Um den Anlauf optimal zu gestalten, wird in bevorzugter Weise diese Strombegrenzung nach dem Einschalten des Motors kurzzeitig deaktiviert, so dass dann der maximale Anlaufstrom durch den niederohmigen Wicklungsstrang bestimmt wird.

Eine besonders vorteilhafte Weiterbildung der Erfindung ist Gegenstand des Patentanspruchs 23. Besonders in Verbindung mit einem Strombegrenzer, der ständig aktiv ist, um dem Motor einen Konstantstrom zuzuführen, ergibt sich in überraschender Weise eine sehr vorteilhafte Kombination, weil ein solcher Radiallüfter eine sehr steile Kennlinie hat, so dass er besonders hohe Drücke aufbauen kann. Dies stellt ein wertvolles Sicherheitsmerkmal dar, z.B. dann, wenn ein Filter im Kreislauf des Lüfters partiell verstopft ist.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: einen Längsschnitt durch einen Lüfter 1, der von einem elektronisch kommutierten Motor 4 angetrieben wird, in stark vergrößerter Darstellung,
- Fig. 2: eine Draufsicht auf den Lüfter der Fig. 1, gesehen in Richtung des Pfeiles II der Fig. 1,
- Fig. 3: ein bevorzugtes Ausführungsbeispiel einer Schaltung zum Betrieb des Motors nach den Fig. 1 und 2,
- Fig. 4: eine Darstellung verschiedener Signale, welche in der Schaltung der Fig. 3 im Betrieb auftreten,
- Fig. 5: eine Darstellung von Signalen, welche beim Start eines Motors nach den Fig. 1 bis 3 auftreten,
- Fig. 6: eine Darstellung zur Erläuterung der Startkommutierung und der dabei auftretenden Signale,
- Fig. 7: eine Darstellung welche zeigt, wie bei der Drehung des Motors 4 an einem Signalausgang 180 ein Signal erzeugt wird, welches die Drehung des Motors anzeigt, und
- Fig. 8: eine Darstellung, welche zeigt, wie bei der Blockierung des Motors 4 am Signalausgang 180 ein Signal erzeugt wird, welches anzeigt, dass sich der Motor nicht dreht.

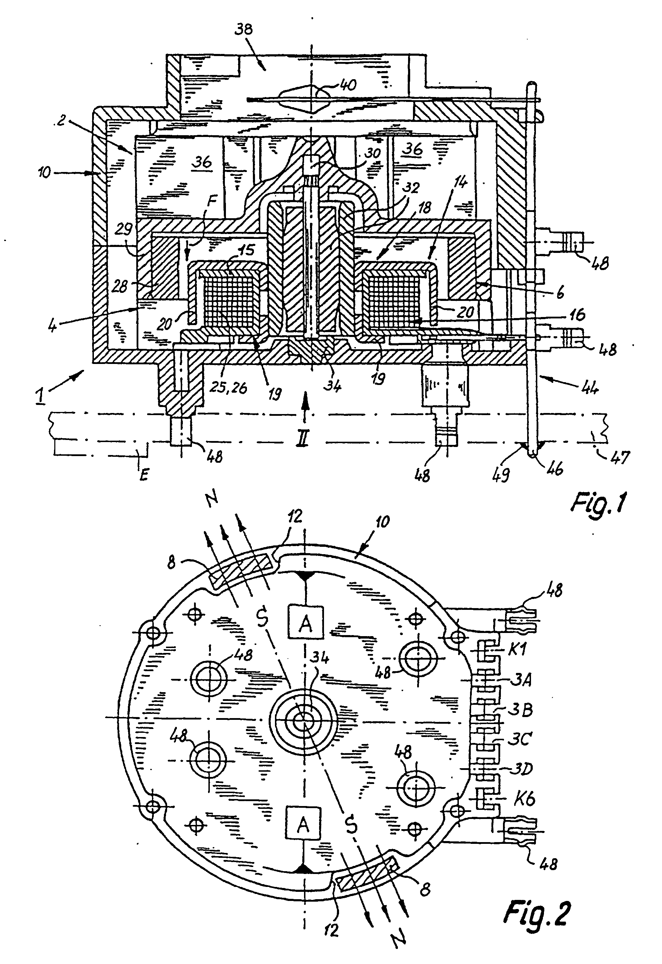

Die **Fig. 1 und 2** zeigen beispielhaft einen Radiallüfter 1, wie er aus der EP 0 908 630 A1 (EP-7008) bekannt ist. Dieser hat ein Lüfterrad 2 und einen elektronisch kommutierten Außenläufer-Klauenpolmotor 4, welcher das Lüfterrad 2 direkt antreibt. Der Motor 4 hat einen permanentmagnetischen Außenrotor 6. Gemäß Fig. 2 sind zwei diametral gegenüberliegende Positioniermagnete 8 vorgesehen, welche im Stillstand des Motors 4 den Rotor 6 in eine Vorzugsstellung, auch Startstellung genannt, drehen, aus der er leicht anlaufen kann. Die Magnete 8 sind in Taschen 12 des Lüftergehäuses 10 angeordnet.

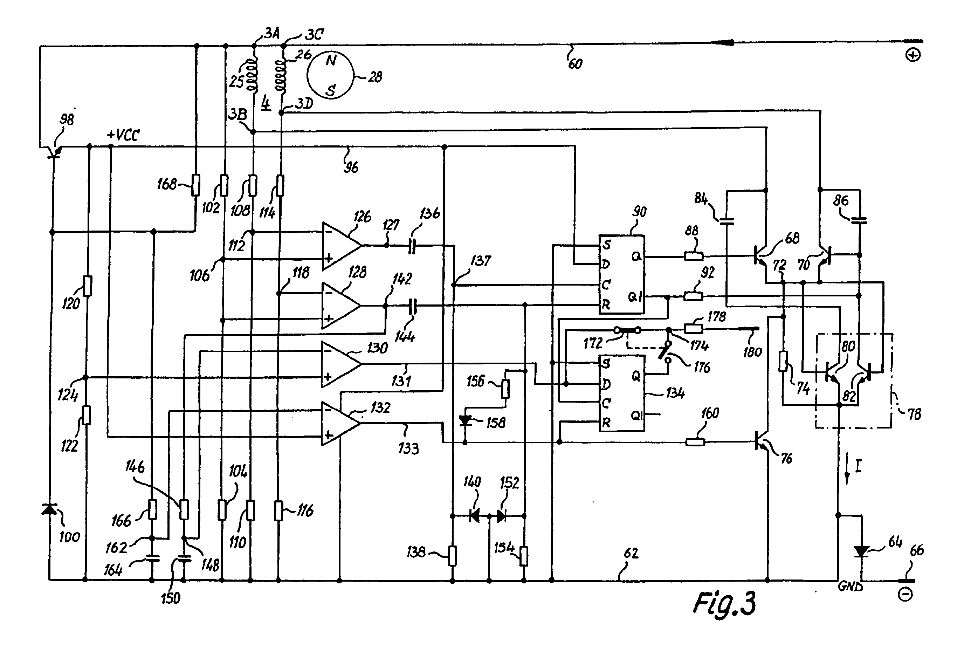

Der Motor 4 hat einen Stator 14 mit zwei gegenüberliegenden Klauenpolblechen 18, 19, zwischen welchen sich, wie dargestellt, auf einem Wickelkörper 15 eine ringförmige Wicklung 16 befindet. Diese ist bifilar gewickelt und hat zwei Wicklungsstränge 25 und 26 mit - bevorzugt - gleichen Windungszahlen. Diese Stränge sind auch in Fig. 3 dargestellt. Sie sind durch den Aufbau des Motors induktiv gekoppelt.

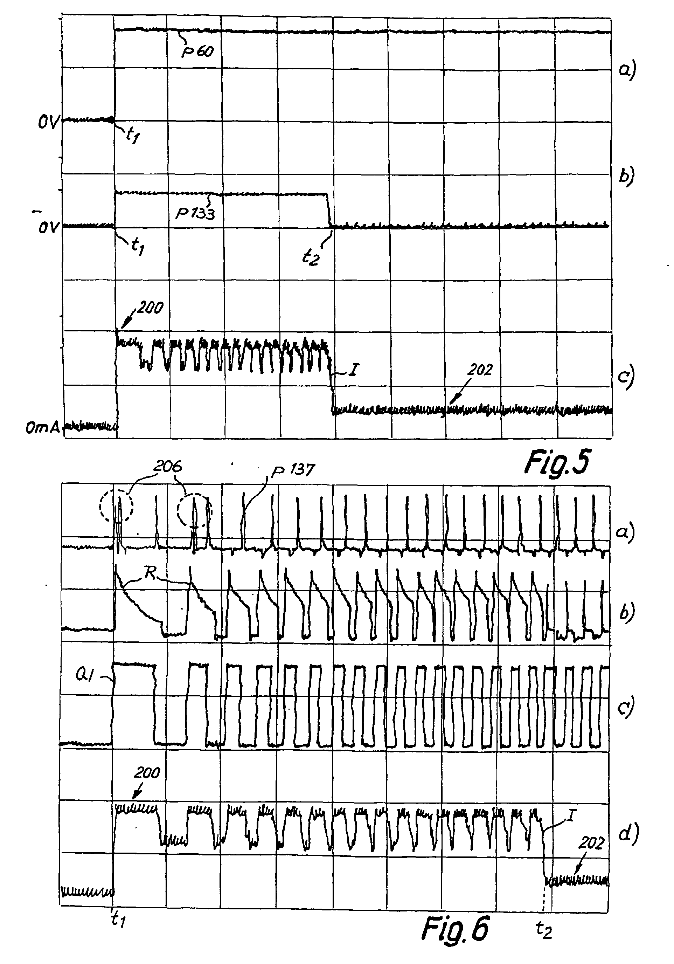

Der Strang 25 hat zwei Anschlüsse 3A und 3B, die in den Fig. 2 und 3 dargestellt sind, und der Strang 26 hat zwei Anschlüsse 3C und 3D. Der Strang 26 ist bevorzugt mit einem dickeren Draht gewickelt als der Strang 25, weshalb der Strang 26 einen Widerstand hat, der um mindestens 10 % niedriger ist als der Widerstand des Stranges 25, so dass durch den Strang 26 ein höherer Anlaufstrom möglich ist als durch den Strang 25, wie das in den Fig. 5 und 6 bei 200 dargestellt ist. Bevorzugt hat der Strang 26 etwa die Hälfte des Widerstands des Strangs 25, z.B.130 bzw. 260 Ω.

Die Klauenpolbleche 18, 19 haben Klauenpole 20, die sich in axialer Richtung erstrecken, vgl. Fig.1. Der Rotormagnet ist mit 28 bezeichnet und kann ein sogenannter Gummimagnet sein, also eine Mischung aus Gummi und Hartferriten. Er befindet sich in einem Trägerteil 29, das einstückig mit dem Lüfterrad 2 ausgebildet ist und in dem auch eine Welle 30 befestigt ist. Letztere läuft in einem Radial-Gleitlager 32, und ihr freies Ende ist an einem Axiallager 34 axial abgestützt. Der Rotor 6 ist gegenüber dem Stator 14 axial versetzt, um eine Kraft F in Richtung auf das Lager 34 zu erzeugen.

Das Lüfterrad 2 hat radial verlaufende Lüfterflügel 36. Eine axiale Luft-Ansaugöffnung ist mit 38 bezeichnet. In ihr befindet sich ein NTC-Widerstand 40, der als Temperatursensor dient und an zwei Anschlüsse K1 und K6 (Fig. 2) angeschlossen ist.

Die Anschlüsse K1, K6 und 3A bis 3D erstrecken sich in axialer Richtung nach unten in Form von länglichen Stiften 44, deren untere Enden 46 an einer strichpunktiert angedeuteten Leiterplatte 47 festgelötet werden können, wie das bei 49 dargestellt ist. Ferner sind Halterungen 48 für die Befestigung des Lüfters 1 vorgesehen. Mit diesen Halterungen kann der Lüfter z.B. an der Leiterplatte 47 befestigt werden.

Lüfter dieser Art eignen sich besonders gut zur Verwendung als sogenannte Leiterplattenlüfter, d.h. zur direkten Anordnung auf einer Leiterplatte, um dort befindliche Bauteile zu kühlen. Hinsichtlich weiterer Einzelheiten wird verwiesen auf die EP 0 908 630 A1.

Häufig werden die elektronischen Bauelemente E für den Betrieb eines solchen Lüfters vom Kunden auf seiner eigenen Leiterplatte 47 montiert, wie das in Fig. 1 symbolisch angedeutet ist, und der Kunde kauft sich nur einen "nackten" Lüfter 1 und montiert diesen auf seiner Leiterplatte, so dass erst durch diese Montage ein lauffähiger Motor entsteht. Diese Art der "Motorherstellung" verbietet im allgemeinen die Verwendung von Rotorstellungssensoren, z.B. eines Hallgenerators, wie sie sonst häufig bei elektronisch kommutierten Motoren verwendet werden, um die Kommutierung zu steuern.

Da sich der Rotormagnet 28 beim Start des Motors 4 durch die Wirkung der stationären Magnete 8 in einer vorgegebenen Startstellung, oder in einer aus einer Mehrzahl vorgegebener Startstellungen, befindet, muss beim Einschalten ein vorgegebener Wicklungsstrang der Statorwicklung 16 einen Startstrom in einer vorgegebenen Richtung erhalten. Zum Einschalten dieses Startstroms dient die Schaltung gemäß Fig. 3. Durch diesen Startstrom wird der Rotormagnet 28 in der gewünschten Richtung in Umdrehung versetzt und induziert dadurch Spannungen in den beiden Wicklungssträngen 25 und 26, und diese Spannungen bewirken, nach einer geeigneten Impulsformung, die Kommutierung des Stroms durch die beiden Wicklungsstränge 25 und 26. Man bezeichnet das auch als Kommutierung mit der induzierten Spannung.

Selbstverständlich kann statt des Motors nach dem EP-A1-0 908 630 z.B. ein Motor nach dem DE-U1-295 01 695.7 oder dem DE-U1-8 702 271.0 verwendet werden. Es handelt sich also bei den Fig. 1 und 2 nur um ein bevorzugtes Ausführungsbeispiel, dessen Zweck es ist, ein besseres Verständnis der Erfindung zu ermöglichen, denn ohne ein solches Beispiel wäre die Erfindung möglicherweise schwer verständlich.

**Fig. 3** zeigt ein Schaltbild gemäß einer bevorzugten Ausführungsform der Erfindung, welche zur elektronischen Kommutierung des Motors nach den Fig. 1 und 2 dient.

Der Wicklungsstrang 25 ist mit seinem Anschluss 3A an eine Plusleitung 60 angeschlossen, die gewöhnlich von der (nicht dargestellten) Batterie eines Fahrzeugs mit einer Spannung zwischen 8 und 16 V versorgt wird. Eine Minusleitung 62 ist über eine Diode 64 mit einem Minusanschluss 66 verbunden. Die Diode 64 verhindert eine Zerstörung des Lüfters 1 bei Falschpolung. Der Anschluss 3B des Wicklungsstrangs 25 ist mit dem Kollektor eines npn-Transistors 68 verbunden.

In gleicher Weise ist der Wicklungsstrang 26 mit seinem Anschluss 3C mit der Plusleitung 60 und mit seinem Anschluss 3D mit dem Kollektor eines npn-Transistors 70 verbunden. Die Emitter der Transistoren 68 und 70 sind mit einem Knotenpunkt 72 verbunden, und dieser ist über einen gemeinsamen Emitterwiderstand 74 an die Minusleitung 62 angeschlossen. Parallel zum Widerstand 74 ist ein npn-Transistor 76 geschaltet, der beim Start den Widerstand 74 während einer kurzen Zeit t1 bis t2 (Fig. 5 und 6) überbrückt, z.B. während 0,4 s, um einen hohen Startstrom 200 und dadurch einen sicheren Anlauf des Motors 4 zu erhalten. Dies wird nachfolgend bei Fig. 5 und 6 beschrieben.

Den Transistoren 68, 70 ist ein Strombegrenzer 78 zugeordnet, welcher den Strom im Widerstand 74 auf einen bestimmten Wert begrenzt, z.B. auf 15 mA. Der Strombegrenzer 78 hat zwei npn-Transistoren 80, 82, deren Emitter mit der Minusleitung 62 und deren Basen mit dem Knotenpunkt 72 verbunden sind. Der Kollektor des Transistors 80 ist mit der Basis des Transistors 68 verbunden, der Kollektor des Transistors 82 mit der Basis des Transistors 70. Beim Transistor 68 ist ein Kondensator 84 zwischen Kollektor und Basis geschaltet, beim Transistor 70 ein Kondensator 86. Diese sogenannten Millerkondensatoren dienen dazu, die Umschaltvorgänge zu verlangsamen.

Die Transistoren 80, 82 werden gesteuert vom Spannungsabfall am Emitterwiderstand 74. Wenn der Motorstrom l zunimmt, wird dieser Spannungsabfall größer, und dadurch werden die Transistoren 80 und 82 stärker leitend und reduzieren dadurch den Basisstrom des im Augenblick leitenden Transistors 68 oder 70, wodurch der Strom l auf einen gewünschten Wert begrenzt wird, der einer gewünschten Drehzahl des Lüfters 1 entspricht. Dieser Strom list z.B. einstellbar durch Verändern des Widerstands 74. Durch den Strombegrenzer 78 wird auch vermieden, dass infolge der unterschiedlichen Widerstände der Stränge 25, 26 unterschiedliche Strangströme fließen, was einen unruhigen Motorlauf bewirken könnte.

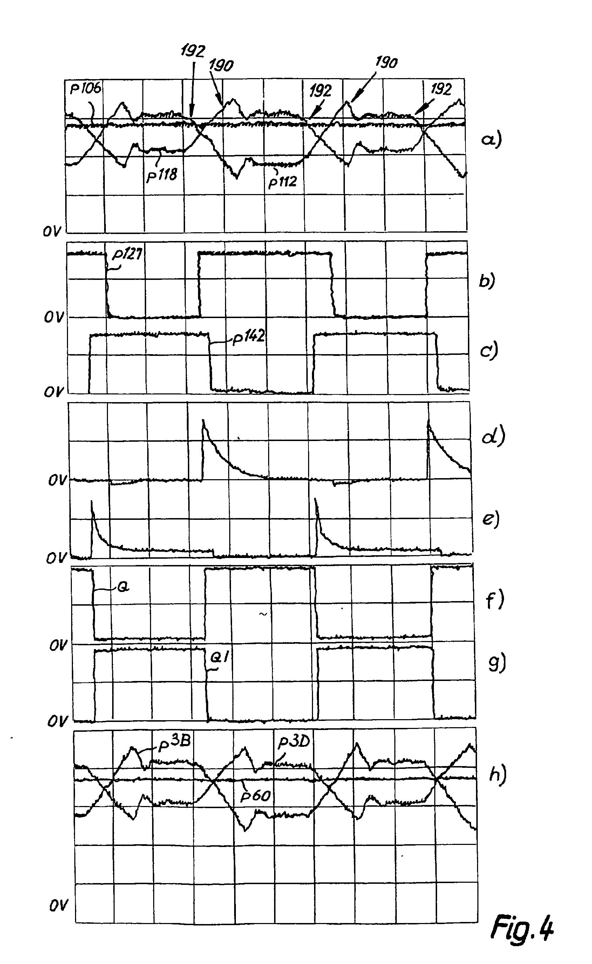

Die Basis des Transistors 68 ist über einen Widerstand 88 mit dem Ausgang Q eines ersten, bistabilen Flipflops 90 verbunden, dessen Ausgang Q/ über einen Widerstand 92 mit der Basis des Transistors 70 verbunden ist. Je nach Schaltstellung des Flipflops 90 ist also entweder der Transistor 68 oder der Transistor 70 eingeschaltet, vgl. nachfolgend Fig. 4f und 4g.

Die elektronischen Bauteile des Motors 4 werden von einer Leitung 96 mit einer geregelten Spannung Vcc von z.B. 7,5 V versorgt. Hierfür dient ein Regeltransistor 98, dessen Basis über eine Zenerdiode 100 mit der Minusleitung 62, dessen Kollektor mit der Plusleitung 60, und dessen Emitter mit der Leitung 96 verbunden ist.

Damit die verschiedenen Spannungen des Motors im Bereich 0 ... 7,5 V liegen, werden sie durch Spannungsteiler in diesen niedrigeren Spannungsbereich transponiert.

Die Betriebsspannung an der Plusleitung 60 wird durch einen Spannungsteiler 102, 104 mit einem Anschluss 106 in den niedrigeren Spannungsbereich transponiert.

Die Spannung am Anschluss 3B wird durch einen Spannungsteiler 108, 110 mit einem Anschluss 112 in den niedrigeren Spannungsbereich transponiert.

Die Spannung am Anschluss 3D wird durch einen Spannungsteiler 114, 116 mit einem Anschluss 118 in diesen niedrigeren Bereich transponiert.

Ferner wird auch die Spannung Vcc an der Leitung 96 durch einen Spannungsteiler 120, 122 mit einem Anschluss 124 in diesen niedrigeren Bereich transponiert.

Der Motor 4 hat vier Komparatoren 126, 128, 130, 132, die an die Spannung Vcc angeschlossen sind, was nur für den Komparator 132 dargestellt ist.

Auch der erste Flipflop 90 und ein zweiter Flipflop 134 sind an die Spannung Vcc angeschlossen, was aus Gründen der Übersichtlichkeit nicht dargestellt ist.

Der Komparator 126 ist mit seinem Pluseingang an den Knotenpunkt 106 und mit seinem Minuseingang an den Knotenpunkt 112 angeschlossen. Sein Ausgang 127 ist über einen Kondensator 136 mit einem Knotenpunkt 137 verbunden, der direkt mit dem Eingang C des FF 90, über einen Widerstand 138 mit der Minusleitung 62, und direkt mit der Katode einer Diode 140 verbunden ist, deren Anode an die Minusleitung 62 angeschlossen ist. Die Diode 140 wird leitend, wenn am Knotenpunkt 137 ein negatives Signal auftritt.

Der Komparator 128 ist mit seinem Pluseingang ebenfalls an den Knotenpunkt 106 angeschlossen, und mit seinem Minuseingang an den Knotenpunkt 118. Sein Ausgang 142 ist über einen Kondensator 144 mit dem dominanten Reset-Eingang R des FF 90 verbunden, ferner über einen Widerstand 146 mit einem Knotenpunkt 148, der über einen Kondensator 150 mit der Minusleitung 62 und direkt mit dem Minuseingang des Komparators 130 verbunden ist, dessen Pluseingang an den Knotenpunkt 124 angeschlossen ist. Der Knotenpunkt 148 ist mit dem Minuseingang des Komparators 130 verbunden, dessen Pluseingang an den Knotenpunkt 124 angeschlossen ist. Der Ausgang des Komparators 130 ist mit 131 bezeichnet.

Der Reset-Eingang R des FF 90 ist direkt mit der Katode einer Diode 152 verbunden, und über einen Widerstand 154 mit der Minusleitung 62. Die Anode der Diode 152 ist an die Minusleitung 62 angeschlossen. Ferner ist der Reset-Eingang R des FF 90 über einen Widerstand 156 mit der Anode einer Diode 158 verbunden, deren Katode mit dem Ausgang 133 des Komparators 132, dem Reset-Eingang R des FF 134 und - über einen Widerstand 160 - mit der Basis des Transistors 76 verbunden ist. Der Ausgang 133 liegt direkt nach dem Einschalten des Motors 4 kurzzeitig auf einem hohen Potenzial und sperrt während dieser Zeit die Diode 158.

Der Pluseingang des Komparators 132 ist mit der Leitung 96 (Spannung Vcc) verbunden, der Minuseingang mit einem Knotenpunkt 162, der über einen Kondensator 164 mit der Minusleitung 62 und über einen Widerstand 166 mit der Basis des Transistors 98 verbunden ist, die ihrerseits über einen Widerstand 168 mit der Plusleitung 60 verbunden ist.

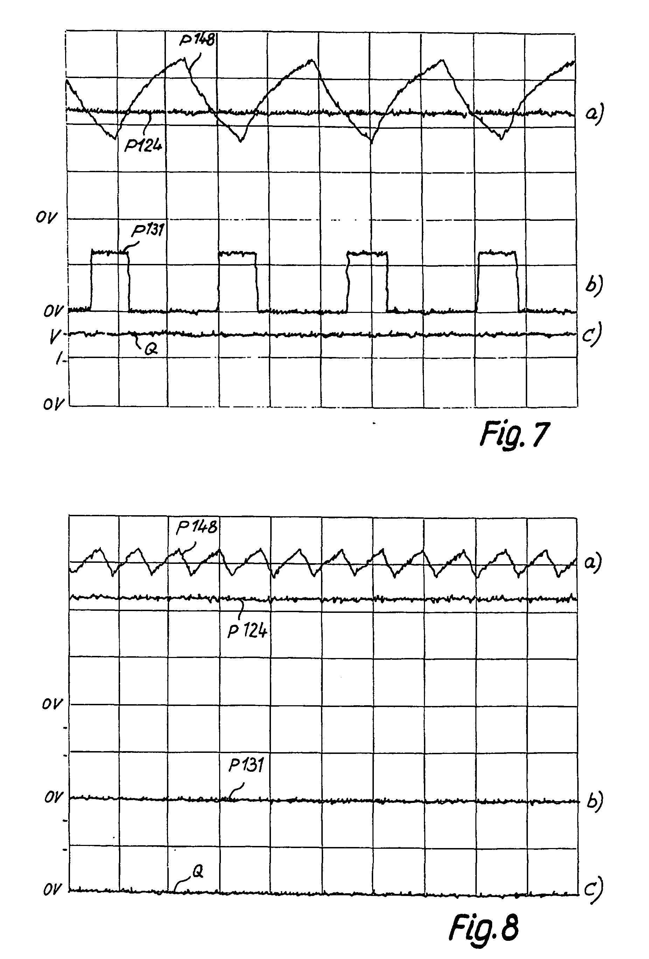

Der Anschluss D des FF 90 ist mit der Leitung 96 verbunden, der Anschluss S beider Flipflops 90, 134 mit der Minusleitung 62. Der Anschluss C des FF 134 ist mit dem Ausgang Q/ des FF 90 verbunden. Der Ausgang 131 des Komparators 130 ist mit dem Eingang D des FF 134 verbunden. Der Eingang R des FF 134 ist mit dem Ausgang 133 des Komparators 132 verbunden. Der Eingang D des FF 134 ist über einen Schalter 172 mit einem Knotenpunkt 174 verbunden, der über einen Schalter 176 mit dem Ausgang Q des FF 134 und über einen Widerstand 178 mit einem Anschluss 180 verbunden ist, an dem man im Betrieb ein Diagnosesignal erhält, das anzeigt, ob der Rotor 28 rotiert oder stillsteht. Dies wird nachfolgend anhand der Fig. 7 und 8 erläutert. Die Schalter 172, 176 sind in der dargestellten Weise miteinander gekoppelt, d.h. entweder ist der Schalter 172 geschlossen und der Schalter 176 geöffnet, oder umgekehrt.

### Bevorzugte Werte für Fig. 3

### Betriebsspannung 8 ... 16 V

Motorstrom l im Dauerbetrieb: 15 mA

| | |
|---|---|
| Strang 25 | 260 Ω |
| Strang 26 | 130 Ω |

Beide Stränge haben die gleiche Windungszahl und sind magnetisch gekoppelt. Die Werte beziehen sich auf einen Motor vom Typ des dargestellten Klauenpolmotors.

| | |
|---|---|
| Transistoren 76, 80, 82, 98 | BC847BS |
| Transistoren 68, 70 | BC817-40 |
| Flipflops 90, 134 | MC14013BD |
| Komparatoren 126, 128, 130, 132 | LM2902D |
| Zenerdiode 100 | BZX284C8V2 |
| Diode 64 | BAS216 |
| Dioden140, 152, 158 | BAW56S |
| Widerstand 120 | 68 kΩ |
| Widerstand 122 | 33 kΩ |
| Widerstände102, 108, 114, 168 | 47 kΩ |
| Widerstände138, 146, 154, 166 | lMΩ |
| Widerstände104, 110, 116, 156 | 20 kΩ |
| Widerstand 74 | 39 Ω |
| Widerstände 88, 92,160,178 | 10 kΩ |
| Kondensator 136 | 1nF |
| Kondensator 144 | 22 nF |
| Kondensatoren 84, 86 | 100 nF |
| Kondensator 164 | 220 nF |
| Kondensator 150 | 4,7 nF |

Diese Werte sind naturgemäß nur beispielhaft zu verstehen.

### Arbeitsweise

Durch die Spannungsteiler102, 104 bzw. 108, 110 bzw. 114, 116 werden die Spannungen an der Plusleitung 60 und an den Wicklungssträngen 25, 26 gleichmäßig auf Werte herunterdividiert, die unterhalb der Spannung Vcc liegen, also z.B. im Bereich 0 ... 7,5 V. So entstehen Abbildungen der Wicklungsspannungen und der Betriebsspannung, welche Abbildungen sich im Arbeitsbereich der Komparatoren 126, 128, 130, 132 befinden.

In Fig. 4a ist mit p106 das Potenzial am Punkt 106 (Fig. 3) bezeichnet, mit p112 das Potenzial am Punkt 112, das ein Abbild der Spannung am Wicklungsstrang 25 ist, und mit p118 das Potenzial am Punkt 118, das eine Abbildung der Spannung am Wicklungsstrang 26 ist.

Mit dem Komparator 126 werden die Nulldurchgänge des Potenzials p112 ermittelt, und mit dem Komparator 128 die Nulldurchgänge des Potenzials p118.

Dabei wird der Umstand ausgenutzt, dass jeweils die positiven Halbwellen der Potenziale p112 und p118 dem stromlosen Zustand des betreffenden Wicklungsstranges 25 bzw. 26 entsprechen, während die negativen Halbwellen entstehen, wenn Strom durch den betreffenden Strang fließt.

Wegen der engen transformatorischen Kopplung der Stränge 25, 26 wirkt sich das Einschalten eines Stranges auch auf die Spannung am anderen Strang aus, was bei der ansteigenden positiven Flanke zu Spannungsspitzen 190 führt. Diese Teile sind deshalb zur Steuerung der Kommutierung ungeeignet. Gemessen wird vielmehr an der abfallenden Flanke 192, und deshalb wird der Nulldurchgang für die Steuerung der Kommutierung an diesen abfallenden Flanken 192 ermittelt.

Fig. 4b) zeigt das Ausgangssignal p127 am Ausgang 127 des Komparators 126. Fig. 4c zeigt das Ausgangssignal p142 am Ausgang 142 des Komparators 128.

Man erhält dort Rechtecksignale, deren Phasenlage invers zum gemessenen Potenzial verläuft. Z.B. verläuft p127 invers zum Potenzial p112, und p142 verläuft invers zum Potenzial p118.

Durch den Kondensator 136 und den Widerstand 138 wird das Signal p127 differenziert, wobei durch die Diode 140 die negativen Spitzen unterdrückt werden. Man erhält so die Signale in Fig. 4d). Durch den Kondensator 144 und den Widerstand 154 wird das Signal p142 differenziert, wobei durch die Diode 152 die negativen Spitzen unterdrückt werden. So erhält man die Signale gemäß Fig. 4e).

Anschließend werden die Nadelimpulse gemäß Fig. 4d) und Fig. 4e) durch den FF 90 in Rechtecksignale umgewandelt, welche in Fig. 4f) und Fig. 4g) dargestellt sind. Fig. 4f) zeigt das Signal am Ausgang Q des FF 90, und Fig. 4g) zeigt das Signal am Ausgang Q/ des FF 90. Das Signal Q steuert den Transistor 68, das Signal Q/ den Transistor 70.

Durch den Strombegrenzer 78 wird der Strom l durch den Motor im Betrieb, also nach der Startphase, auf einen vorgegebenen Wert begrenzt, z.B. auf 15 mA. Dadurch erhält man am Punkt 3B den Potenzialverlauf p3B gemäß Fig. 4h), und am Punkt 3D erhält man den Potenzialverlauf p3D gemäß Fig. 4h). Mit p60 ist das Potenzial an der Leitung 60 zum Vergleich dargestellt, das z.B. + 16 V betragen kann, wenn die Fahrzeugbatterie voll geladen ist. Die Spannung an den Strängen 25, 26 alterniert also um einen Mittelwert, der in Fig. 4h z.B. + 16 V beträgt.

### Anlaufschaltung

Fig. 5a) zeigt, wie zum Zeitpunkt t1 der Motor 4 eingeschaltet wird, wodurch das Potenzial p60 der Plusleitung 60 von 0 V auf z.B. 16 V springt.

Hierdurch entsteht an der Zenerdiode 100 (Fig. 3) eine Spannung von z.B. 7,5 V, und durch diese wird über den Widerstand 166 der - zuvor entladene-Kondensator 164 aufgeladen. Diese Aufladung dauert ca. 400 ms, nämlich von t1 bis t2, und während dieser Zeit wird der Transistor 76 durch das Ausgangssignal des Komparators 132 leitend gehalten. Fig. 5b zeigt hierzu das Potenzial p133 am Ausgang 133 des Komparators 132, das zwischen den Zeitpunkten t1 und t2 hoch ist und den Transistor 76 leitend hält. Fig. 5c) zeigt den Anlauf-Motorstrom l, der während dieser Zeit einen erhöhten Wert hat. (Die Welligkeit des Stromes l während des Zeitraums ohne Strombegrenzung ist eine Folge davon, dass die Wicklungsstränge 25 und 26 bei diesem Motor bevorzugt unterschiedliche Widerstände haben, und ohne Strombegrenzung wird der Motorstrom l im wesentlichen durch die Widerstände der Stränge 25, 26 bestimmt.)

### Bestromen der richtigen Wicklung beim Start

Beim Einschalten muss der Strang 26 als erster Strom erhalten, da dann der Motor 28 aus seiner Startstellung in der richtigen Richtung anläuft und man einen besonders hohen Startstrom, also einen besonders sicheren Start, erhält. (Die Startstellung wird durch die Dauermagnete 8 erzeugt, die in Fig. 2 dargestellt sind). Beim Ausführungsbeispiel hat der Strang 26 einen Widerstand von 130 Ohm, der Strang 25 einen Widerstand von 260 Ohm, so dass ein Start mit dem Strang 26 einen höheren Startstrom ergibt, was in Fig. 5c) bei 200 aus dem Oszillogramm klar ersichtlich ist. In Fig. 5c) ist bei 202 die Strombegrenzung auf 15 mA nach dem Zeitpunkt t2 ebenfalls klar ersichtlich. Fig. 6d) zeigt diesen Stromverlauf ebenfalls, aber mit größerer zeitlicher Auflösung. Dort werden dieselben Bezugszeichen verwendet.

Das Fließen des Startstroms durch den Strang 26 bedeutet, dass der Transistor 70 durch ein Ausgangssignal am Ausgang Q/ des FF 90 leitend gesteuert wird. Um dies sicherzustellen, werden für die Flipflops 90 und 134 Flipflops verwendet, bei denen einer der Eingänge dominant ist, d.h. solange an diesem dominanten Eingang R ein Signal liegt, haben Signale an einem anderen Eingang keinen Einfluss. Mit diesem dominanten Eingang R wird der Strang 26 gesteuert, der beim Start als erster eingeschaltet werden muss. Der andere Strang 25 wird von einem Eingang C gesteuert, der flankengetriggert ist.

Wenn der dominante Eingang R den Strang 26 eingeschaltet hat, könnten Störimpulse am anderen Eingang C eine zu frühe Kommutierung auf den Strang 25 bewirken und dadurch den Anlauf behindern.

Um das zu verhindern, wird das Signal am dominanten Eingang R während des Anlaufs "verbreitert", so dass der dominante Zustand nicht nur während des Schaltvorgangs selbst wirkt, sondern auch noch etwas danach.

Nach dem Start wird diese "Impulsverbreiterung" automatisch abgeschaltet.

Man geht also zur Sicherstellung des Startvorgangs wie folgt vor:
a) Über den Reset-Eingang R des FF 90 wird der Ausgang Q/ des FF 90 statisch dominant auf einen hohen Wert gesetzt.
b) Das Rücksetzen des Ausgangs Q/, also das Setzen des Ausgangs Q, erfolgt mittels des Clock-Eingangs C des FF 90, also flankengetriggert.
c) Der Kondensator 144 (z.B. 22 nF) ist größer als der Kondensator 136 (z.B. 1 nF).

Zusätzlich wird beim Start durch den positiven Ausgang 133 des Komparators 132 eine andere Zeitkonstante am Reset-Eingang R des FF 90 wirksam, da dann die Diode 158 sperrt, wie bereits erläutert. Beim Start ist deshalb am Reset-Eingang R die Zeitkonstante C144 * R154 wirksam. Diese ist relativ groß und verhindert, dass die in Fig. 6a) bei 206 dargestellten Störimpulse des Potenzials p137 am Knotenpunkt 137 den Motor 4 zum Schwingen anregen.

Nach Ablauf der Startphase geht der Ausgang 133 des Komparators 132 auf ein niedrigeres Potenzial, da der Kondensator 164 jetzt geladen ist, und die Diode 158 wird leitend und schaltet den Widerstand 156 parallel zum Widerstand 154, wodurch die eben erläuterte Zeitkonstante entsprechend kleiner wird.

Fig. 6b) zeigt die Impulse am Reset-Eingang R des FF 90, welche beim Start statisch dominant das Signal Q/ (Fig. 6c) am Ausgang Q/ des FF 90 auf hoch setzen, wenn sie einen hohen Wert haben. Man erkennt, dass durch die beschriebene erhöhte Zeitkonstante beim Anlauf die Signale R (Fig. 6b) zwischen den Zeitpunkten t1 und t2 eine andere Form haben als nach dem Zeitpunkt t2, d.h. wegen der beschriebenen Änderung der Zeitkonstanten haben nach dem Zeitpunkt t2 diese Impulse mehr die Form von Nadelimpulsen.

### Rotordrehungs-Diagnosesignal

Vielfach wird verlangt, dass ein Lüfter automatisch ein Warnsignal abgibt, wenn sich sein Rotor nicht drehen kann, z.B., weil eine Maus in den Lüfter gekrochen ist und diesen blockiert.

Hierfür ist der Kondensator 150 vorgesehen, welcher über den Widerstand 146 geladen und entladen wird, wenn der Motor 4 läuft, da sich dann das Potenzial p142 (Fig. 4c) am Knotenpunkt 142 ständig zwischen hoch und niedrig ändert, so dass am Knotenpunkt 148 eine Sägezahnspannung p148 entsteht, die abwechselnd größer und kleiner ist als das Potenzial p124 am Knotenpunkt 124, das z.B. ein Drittel von Vcc beträgt. Dadurch entsteht am Ausgang 131 des Komparators 130 ein Rechtecksignal p131, das in Fig. 7b) dargestellt ist. Dieses wird dem FF 134 zugeführt, der als D-Flipflop geschaltet ist, und dort in ein statisches High-Signal umgewandelt, das dort am Ausgang Q verfügbar ist und in Fig. 7c) dargestellt ist. Diese hohe Signal Q ist am Anschluss 180 messbar und zeigt an, dass der Lüfter 1 rotiert.

Wenn der Motor 4 blockiert ist, wirkt die Schaltung infolge der engen induktiven Kopplung der beiden Stränge 25, 26 wie ein Oszillator, d.h. diese beiden Stränge werden jetzt abwechselnd mit einer relativ hohen Frequenz aus- und eingeschaltet. (Diese Frequenz ist ca. 2,5 mal höher als die Frequenz, die bei Betriebsdrehzahl erreicht wird.) Diesen Zustand zeigt Fig. 8. Das Potenzial p148 hat hier ebenfalls die Form einer Sägezahnspannung, aber mit einer höheren Frequenz, und deshalb oszilliert das Potenzial p148 ständig um einen hohen Wert, der höher ist als das Potenzial p124, so dass bei blockiertem Motor keine Rechteckimpulse p131 (Fig. 7b) erzeugt werden und folglich das Potenzial p131 niedrig bleibt. Ebenso bleibt der Ausgang Q des D-Flipflops 134 niedrig, vgl. Fig. 8c.

Je nach Stellung der Schalter 172, 176 erhält man also folgende Möglichkeiten:
a) Bei geschlossenem Schalter 172 erhält man am Ausgang 180 ein Signal entsprechend dem Potenzial p131, also Impulse, wenn der Motor 4 läuft, und keine Impulse, wenn er steht.
b) Bei geschlossenem Schalter 176 erhält man am Ausgang 180 das Signal Q, das hoch ist, wenn der Motor läuft, und niedrig, wenn der Motor blockiert ist.

Mittels der Schalter 172, 176 kann der Kunde auswählen, auf welche Weise er über den Betriebszustand des Motors 4 informiert werden möchte. Alternativ kann man statt der Schalter 172, 176 bei der Herstellung eine feste Verbindung für die Art der Anzeige vorsehen, die der Kunde haben möchte. Bei Verwendung eines Mikrocontrollers kann die Art der Anzeige ggf. auch programmiert werden.

## Patentansprüche

1. Elektronisch kommutierter Motor (4),
mit einem permanentmagnetischen Rotor (28) und mit einem Stator (14), welcher Stator zwei Wicklungsstränge (25, 26) aufweist, von denen - während einer Rotordrehung von 360° el. -
zunächst dem einen Wicklungsstrang (25) innerhalb eines ersten Drehwinkelbereichs über einen zugeordneten ersten Halbleiterschalter (68) Strom zugeführt wird und innerhalb eines anschließenden zweiten Drehwinkelbereichs dem anderen Wicklungsstrang (26) über einen zugeordneten zweiten Halbleiterschalter (70) Strom zugeführt wird,
mit einer Kommutierungsvorrichtung zum alternierenden Einschalten des ersten Halbleiterschalters (68) und des zweiten Halbleiterschalters (70), welche einen bistabilen Multivibrator (FF90) aufweist, dessen Schaltzustand über mindestens einen Komparator (126, 128) durch die Spannung gesteuert wird, die vom permanentmagnetischen Rotor (28) in demjenigen im Augenblick stromlosen Wicklungsstrang (25 bzw. 26) induziert wird, der im augenblicklichen Drehwinkelbereich des Rotors (28) nicht über seinen zugeordneten Halbleiterschalter (68 bzw. 70) mit Strom versorgt wird.

2. Motor nach Anspruch 1, bei welchem der bistabile Multivibrator (FF90) eine elektrische Vorzugsstellung aufweist, die er beim Einschalten einnimmt, um beim Einschaltvorgang die Stromversorgung eines vorgegebenen Wicklungsstranges (26) zu bewirken.

3. Motor nach Anspruch 2, bei welchem der Rotor (28) im stromlosen Zustand des Motors (4) eine vorgegebene Stellung einnimmt, aus der er bei Erregung des vorgegebenen Wicklungsstranges (26) in der gewünschten Drehrichtung startet.

4. Motor nach einem der Ansprüche 1 bis 3, bei welchem eine in einem stromlosen Wicklungsstrang induzierte Spannung über eine Impulsformerstufe in einen Schaltimpuls (Fig. 4d, 4e) zum Umschalten des bistabilen Multivibrators (FF90) umgeformt wird.

5. Motor nach einem oder mehreren der vorhergehenden Ansprüche, bei welchem ein Strombegrenzer (78) vorgesehen ist, welcher den Strom (I) durch die Wicklungsstränge (25, 26) auf einen vorgegebenen Wert begrenzt.

6. Motor nach Anspruch 5, bei welchem der Strombegrenzer (78) während einer vorgegebenen Zeitspanne nach dem Einschalten des Motors (4) deaktiviert ist, um einen erhöhten Anlaufstrom (200) zu ermöglichen.

7. Motor nach Anspruch 5 oder 6, bei welchem ein Schaltglied (76) vorgesehen ist, welches während einer vorgegebenen Zeitspanne nach dem Einschalten des Motors (4) eingeschaltet wird und dabei den Strombegrenzer (78) überbrückt, um einen hohen Anlaufstrom zu ermöglichen.

8. Motor nach einem der Ansprüche 5 bis 7, bei welchem die Halbleiterschalter als Leistungstransistoren (68, 70) ausgebildet sind, und jedem Leistungstransistor ein Transistor (80, 82) zugeordnet ist, welcher bei zunehmendem Motorstrom (I) stärker leitend wird, dabei den Basisstrom des ihm zugeordneten Leistungstransistors (68, 70) reduziert, und so den Motorstrom (I) im wesentlichen konstant hält.

9. Motor nach einem oder mehreren der vorhergehenden Ansprüche, bei welchem ein Wicklungsstrang (26) einen um mindestens 10 % niedrigeren ohmschen Widerstand hat als der andere Wicklungsstrang (25).

10. Motor nach Anspruch 9, bei welchem die im Betrieb an einem Wicklungsstrang (25, 26) auftretende Spannung (Fig. 4h) in ein im wesentlichen rechteckförmiges Signal (Fig. 4b, 4c) umgeformt wird, und die Umschaltung des bistabilen Multivibrators (FF90) durch eine Flanke dieses Signals gesteuert wird.

11. Motor nach einem oder mehreren der vorhergehenden Ansprüche, bei welchem ein Anschluss (180) vorgesehen ist, an welchem bei eingeschaltetem Motor ein Signal abnehmbar ist, dessen Wert davon abhängt, ob sich der Motor dreht oder nicht.

12. Motor nach einem oder mehreren der vorhergehenden Ansprüche, bei welchem der Multivibrator (FF90) einen dominanten Eingang (R) aufweist, an welchen beim Einschalten des Motors ein Einschaltsignal gelegt wird, welches das Einschalten eines vorgegebenen Wicklungsstrangs (26) bewirkt.

13. Motor nach Anspruch 12, bei welchem der vorgegebene Wicklungsstrang (26), welcher beim Einschalten des Motors bestromt wird, mindestens einer vorgegebenen Drehstellung des Rotors (28) zugeordnet ist, welche dieser im stromlosen Zustand des Motors (4) einnimmt,
um einen Start des Rotors (28) in einer gewünschten Drehrichtung zu bewirken.

14. Elektronisch kommutierter Motor (4),
mit einem permanentmagnetischen Rotor (26) und mit einem Stator (14), welcher Stator zwei Wicklungsstränge (25,26) aufweist, von denen im Betrieb
- während einer Rotordrehung von 360° el. -
zunächst dem einen Wicklungsstrang (25) innerhalb eines ersten Drehwinkelbereichs über einen zugeordneten ersten Halbleiterschalter (68) Strom zugeführt wird und innerhalb eines anschließenden zweiten Drehwinkelbereichs dem anderen Wicklungsstrang (26) über einen zugeordneten zweiten Halbleiterschalter (70) Strom zugeführt wird,
mit einer Kommutierungsvorrichtung (90) zum alternierenden Einschalten des ersten Halbleiterschalters (68) und des zweiten Halbleiterschalters (70),
wobei sich die ohmschen Widerstände der beiden Wicklungsstränge (25, 26) um mindestens 10 % unterscheiden, so dass ein Wicklungsstrang (25) hochohmig und ein Wicklungsstrang (26) niederohmig ist,
und die Kommutierungsvorrichtung (90) so ausgebildet ist, dass sie beim Einschalten des Motors (4) zuerst den Halbleiterschalter (70) einschaltet, der dem niederohmigen Wicklungsstrang (26) zugeordnet ist.

15. Motor nach Anspruch 14, bei welchem eine Strombegrenzung (78) vorgesehen ist, welche im Betrieb des Motors (4) den Strom (I) durch die Wicklungsstränge (25, 26) auf einen im wesentlichen identischen Wert begrenzt, der einer gewünschten Drehzahl des Motors zugeordnet ist.

16. Motor nach Anspruch 15, bei welchem die Strombegrenzung nach dem Einschalten des Motors kurzzeitig deaktiviert wird, um einen erhöhten Anlaufstrom zu erhalten.

17. Motor nach Anspruch 16, bei welchem ein Zeitglied (132, 164, 166) vorgesehen ist, welches durch das Einschalten des Motors aktivierbar ist und während einer vorgegebenen Zeitspanne (Fig. 5: t1 bis t2) die Strombegrenzung (78) deaktiviert.

18. Motor nach Anspruch 17, bei welchem das Zeitglied (132, 164, 166) im aktivierten Zustand die Zeitkonstante eines der Kommutierungsvorrichtung (90) zugeordnetem RC-Glieds (144, 154, 156) verändert, um beim Einschalten des Motors (4) als erstes einen Strom durch den niederohmigen Wicklungsstrang (26) zu bewirken, welcher Strom bei deaktivierter Strombegrenzung nicht durch die Strombegrenzung (78) begrenzt ist.

19. Motor nach einem der Ansprüche 14 bis 18, welcher einen bistabilen Multivibrator (FF90) aufweist, dessen Schaltzustand durch die Spannung gesteuert wird, die vom permanentmagnetischen Rotor (28) in demjenigen im Augenblick stromlosen Wicklungsstrang (25 bzw. 26) induziert wird, der im augenblicklichen Drehwinkelbereich des Rotors (28) nicht über seinen zugeordneten Halbleiterschalter (68 bzw. 70) mit Strom versorgt wird.

20. Motor nach Anspruch 19, bei welchem der Multivibrator (FF90) einen dominanten Eingang (R) aufweist, an welchen beim Einschalten des Motors ein Einschaltsignal gelegt wird, welches das Einschalten des niederohmigen Wicklungsstrangs (26) bewirkt.

21. Motor nach einem der Ansprüche 14 bis 20, bei welchem der niederohmige Wicklungsstrang (26), welcher beim Einschalten des Motors bestromt wird, mindestens einer vorgegebenen Drehstellung des Rotors (28) zugeordnet ist, welche dieser im stromlosen Zustand des Motors (4) einnimmt,
um durch Bestromen dieses niederohmigen Wicklungsstranges (26) einen Start des Rotors (28) in einer gewünschten Drehrichtung zu bewirken.

22. Motor nach einem oder mehreren der vorhergehenden Ansprüche, bei welchem am Stator mindestens ein Dauermagnet (8) vorgesehen ist, um im stromlosen Zustand des Motors den Rotor (14) in eine vorgegebene Drehstellung, oder in eine aus einer Mehrzahl vorgegebener Drehstellungen, zu drehen.

23. Motor nach einem oder mehreren der vorhergehenden Ansprüche, welcher mit einem Radiallüfterrad gekoppelt ist.

## Claims

1. Electronically commutated motor (4),
with a permanently magnetic rotor (28) and with a stator (14), said stator having two winding phases (25, 26), of which
- during a rotor rotation of 360° el. -
first current is fed to one winding phase (25) within a first angle of rotation range via an assigned first semiconductor switch (68), and within a following second angle of rotation range current is fed to the other winding phase (26) via an assigned second semiconductor switch (70), with a commutation device for switching on the first semiconductor switch (68) and second semiconductor switch (70) alternately, said commutation device having a bistable multivibrator (FF90), the switching state of which is controlled via at least one comparator (126, 128) through the voltage which is induced by the permanently magnetic rotor (28) in that momentarily currentless winding phase (25 or 26) to which current is not supplied via its assigned semiconductor switch (68 or 70) in the momentary angle of rotation range of the rotor (28).

2. Motor according to Claim 1, wherein the bistable multivibrator (FF90) has an electrical preferred position, which it takes at switch-on, to cause current to be supplied to a predetermined winding phase (26) in the switch-on process.

3. Motor according to Claim 2, wherein the rotor (28) in the currentless state of the motor (4) takes a predetermined position, from which it starts in the desired direction of rotation when the predetermined winding phase (26) is excited.

4. Motor according to one of Claims 1 to 3, wherein a voltage which is induced in a currentless winding phase is converted via a pulse shaping stage into a switching pulse (Figs. 4d, 4e) to switch the bistable multivibrator (FF90).

5. Motor according to one or more of the preceding claims, wherein a current limiter (78), which limits the current (I) through the winding phases (25, 26) to a predetermined value, is provided.

6. Motor according to Claim 5, wherein the current limiter (78) is deactivated during a predetermined time span after the motor (4) is switched on, to make an increased starting current (200) possible.

7. Motor according to Claim 5 or 6, wherein a switching element (76), which is switched on during a predetermined time span after the motor (4) is switched on and short-circuits the current limiter (78), to make a high starting current possible, is provided.

8. Motor according to one of Claims 5 to 7, wherein the semiconductor switches are in the form of power transistors (68, 70), and a transistor (80, 82) is assigned to each power transistor, becomes more strongly conducting with increasing motor current (I), thereby reduces the base current of the power transistor (68, 70) assigned to it, and thus keeps the motor current (I) essentially constant.

9. Motor according to one or more of the preceding claims, wherein one winding phase (26) has a lower ohmic resistance by at least 10% than the other winding phase (25).

10. Motor according to Claim 9, wherein the voltage (Fig. 4h) which occurs in operation on one winding phase (25, 26) is converted into an essentially rectangular signal (Figs. 4b, 4c), and the switching of the bistable multivibrator (FF90) is controlled by an edge of this signal.

11. Motor according to one or more of the preceding claims, wherein a terminal (180), at which a signal, the value of which depends on whether the motor is rotating or not, can be tapped when the motor is in the switched-on state, is provided.

12. Motor according to one or more of the preceding claims, wherein the multivibrator (FF90) has a dominant input (R), onto which, at the instant when the motor is switched on, a switching-on signal, which causes a predetermined winding phase (26) to be switched on, is put.

13. Motor according to Claim 12, wherein the predetermined winding phase (26), to which current is supplied at the instant when the motor is switched on, is assigned to at least one predetermined rotational position of the rotor (28), which takes this position in the currentless state of the motor (4),
to cause the rotor (28) to start in a desired direction of rotation.

14. Electronically commutated motor (4),
with a permanently magnetic rotor (26) and with a stator (14), said stator having two winding phases (25, 26), of which in operation
- during a rotor rotation of 360° el. -
first current is fed to one winding phase (25) within a first angle of rotation range via an assigned first semiconductor switch (68), and within a following second angle of rotation range current is fed to the other winding phase (26) via an assigned second semiconductor switch (70), with a commutation device (90) for switching on the first semiconductor switch (68) and second semiconductor switch (70) alternately, the ohmic resistances of the two winding phases (25, 26) differing by at least 10%, so that one winding phase (25) has high resistance and one winding phase (26) has low resistance,
and the commutation device (90) being in such a form that at the instant when the motor (4) is switched on, it first switches on the semiconductor switch (70) to which the low-resistance winding phase (26) is assigned.

15. Motor according to Claim 14, wherein a current limiter (78), which when the motor (4) is operating limits the current (I) through the winding phases (25, 26) to an essentially identical value which is assigned to a desired rotational speed of the motor, is provided.

16. Motor according to Claim 15, wherein the current limiter is deactivated briefly after the motor is switched on, to obtain an increased starting current.

17. Motor according to Claim 16, wherein a timing element (132, 164, 166), which can be activated by the motor being switched on and deactivates the current limiter (78) during a predetermined time span (Fig. 5: t1 to t2), is provided.

18. Motor according to Claim 17, wherein the timing element (132, 164, 166) in the activated state changes the time constant of an RC element (144, 155, 156) assigned to the commutation device (90), in order, at the instant when the motor (4) is switched on, first to cause a current through the low-resistance winding phase (26), said current not being limited by the current limiter (78) when the current limiter is deactivated.

19. Motor according to one of Claims 14 to 18, having a bistable multivibrator (FF90), the switching state of which is controlled by the voltage which is induced by the permanently magnetic rotor (28) in that momentarily currentless winding phase (25 or 26) to which current is not supplied via its assigned semiconductor switch (68 or 70) in the momentary angle of rotation range of the rotor (28).

20. Motor according to Claim 19, wherein the multivibrator (FF90) has a dominant input (R), onto which, at the instant when the motor is switched on, a switching-on signal, which causes the low-resistance winding phase (26) to be switched on, is put.

21. Motor according to one of Claims 14 to 20, wherein the low-resistance winding phase (26), to which current is supplied at the instant when the motor is switched on, is assigned to at least one predetermined rotational position of the rotor (28), which takes this position in the currentless state of the motor (4),
to cause the rotor (28) to start in a desired direction of rotation by supplying current to this low-resistance winding phase (26).

22. Motor according to one or more of the preceding claims, wherein at least one permanent magnet (8) is provided on the stator, in order, in the currentless state of the motor, to rotate the rotor (14) into a predetermined rotational position, or into one of multiple predetermined rotational positions.

23. Motor according to one or more of the preceding claims, which is connected to a radial fan wheel.

## Revendications

1. Moteur à commutation électronique (4),
avec un rotor (28) à aimant permanent et avec un stator (14), lequel stator présente deux enroulements de phase (25, 26) dans lesquels,
pendant une rotation du rotor de 360° él.,
à l'intérieur d'une première plage d'angle de rotation, du courant est amené d'abord à un enroulement de phase (25) via un premier commutateur à semi-conducteurs (68) associé et, à l'intérieur d'une deuxième plage d'angle de rotation suivante, du courant est amené à l'autre enroulement de phase (26) via un deuxième commutateur à semi-conducteurs (70) associé,
avec un dispositif de commutation pour l'activation alternée du premier commutateur à semi-conducteurs (68) et du deuxième commutateur à semi-conducteurs (70), lequel présente un multivibrateur bistable (FF90) dont l'état de commutation est commandé, via au moins un comparateur (126, 128), par la tension qui est induite par le rotor (28) à aimant permanent dans l'enroulement de phase (25 ou 26) momentanément sans courant qui, dans la plage d'angle de rotation momentanée du rotor (28), n'est pas alimenté en courant via son commutateur à semi-conducteurs (68 ou 70) associé.

2. Moteur selon la revendication 1, dans lequel le multivibrateur bistable (FF90) présente une position électrique préférentielle qu'il occupe lors de l'activation pour provoquer, lors du processus d'activation, l'alimentation en courant d'un enroulement de phase (26) prédéfini.

3. Moteur selon la revendication 2, dans lequel le rotor (28) occupe, quand le moteur (4) n'est pas alimenté, une position prédéfinie à partir de laquelle il démarre dans le sens de rotation désiré lors de l'excitation de l'enroulement de phase (26) prédéfini.

4. Moteur selon l'une des revendications 1 à 3, dans lequel une tension induite dans un enroulement de phase non alimenté est transformée, via un étage formeur d'impulsions, en une impulsion de commutation (fig. 4d, 4e) pour commuter le multivibrateur bistable (FF90).

5. Moteur selon l'une ou plusieurs des revendications précédentes, dans lequel il est prévu un limiteur de courant (78) qui limite le courant (I) à travers les enroulements de phase (25, 26) à une valeur prédéfinie.

6. Moteur selon la revendication 5, dans lequel le limiteur de courant (78) est désactivé pendant un intervalle de temps prédéfini après la mise en marche du moteur (4) pour permettre un courant de démarrage (200) plus élevé.

7. Moteur selon la revendication 5 ou 6, dans lequel il est prévu un organe de commutation (76) qui est activé pendant un intervalle de temps prédéfini après la mise en marche du moteur (4), court-circuitant ainsi le limiteur de courant (78) pour permettre un courant de démarrage élevé.

8. Moteur selon l'une des revendications 5 à 7, dans lequel les commutateurs à semi-conducteurs sont des transistors de puissance (68, 70) et à chaque transistor de puissance est associé un transistor (80, 82) qui devient plus fortement conducteur lorsque le courant de moteur (I) augmente, réduisant ainsi le courant de base du transistor de puissance (68, 70) qui lui est associé et maintenant de cette manière le courant de moteur (I) essentiellement constant.

9. Moteur selon l'une ou plusieurs des revendications précédentes, dans lequel un enroulement de phase (26) a une résistance ohmique plus basse d'au moins 10 % que l'autre enroulement de phase (25).

10. Moteur selon la revendication 9, dans lequel la tension apparaissant en cours de fonctionnement à un enroulement de phase (25, 26) (fig. 4h) est transformée en un signal essentiellement rectangulaire (fig. 4b, 4c), et la commutation du multivibrateur bistable (FF90) est commandée par un flanc de ce signal.

11. Moteur selon l'une ou plusieurs des revendications précédentes, dans lequel il est prévu une connexion (180) à laquelle, quand le moteur a été mis en marche, on peut prélever un signal dont la valeur dépend du fait que le moteur tourne ou non.

12. Moteur selon l'une ou plusieurs des revendications précédentes, dans lequel le multivibrateur (FF90) présente une entrée dominante (R) à laquelle, lorsque le moteur est mis en marche, est appliqué un signal de mise en marche qui provoque l'activation d'un enroulement de phase (26) prédéfini.

13. Moteur selon la revendication 12, dans lequel l'enroulement de phase (26) prédéfini qui est excité ou alimenté en courant lorsque le moteur est mis en marche est associé à au moins une position de rotation prédéfinie du rotor (28), que ce dernier occupe quand le moteur (4) n'est pas alimenté, pour provoquer un démarrage du rotor (28) dans un sens de rotation désiré.

14. Moteur à commutation électronique (4),
avec un rotor (28) à aimant permanent et avec un stator (14), lequel stator présente deux enroulements de phase (25, 26) dans lesquels, en fonctionnement,
pendant une rotation du rotor de 360° él.,
à l'intérieur d'une première plage d'angle de rotation, du courant est amené d'abord à un enroulement de phase (25) via un premier commutateur à semi-conducteurs (68) associé et, à l'intérieur d'une deuxième plage d'angle de rotation suivante, du courant est amené à l'autre enroulement de phase (26) via un deuxième commutateur à semi-conducteurs (70) associé,
avec un dispositif de commutation (90) pour l'activation alternée du premier commutateur à semi-conducteurs (68) et du deuxième commutateur à semi-conducteurs (70),
les résistances ohmiques des deux enroulements de phase (25, 26) différant d'au moins 10 %, de sorte qu'un enroulement de phase (25) est à haute résistance et un enroulement de phase (26) est à basse résistance,
et le dispositif de commutation (90) est configuré de manière que, lorsque le moteur (4) est mis en marche, il active en premier lieu le commutateur à semi-conducteurs (70) associé à l'enroulement de phase à basse résistance (26).

15. Moteur selon la revendication 14, dans lequel il est prévu une limitation de courant (78) qui, quand le moteur (4) est en fonctionnement, limite le courant (I) à travers les enroulements de phase (25, 26) à une valeur essentiellement identique qui est associée à une vitesse de rotation désirée du moteur.

16. Moteur selon la revendication 15, dans lequel la limitation de courant est brièvement désactivée après la mise en marche du moteur pour obtenir un courant de démarrage plus élevé.

17. Moteur selon la revendication 16, dans lequel il est prévu un organe de temporisation (132, 164, 166) qui peut être activé par la mise en marche du moteur et désactive la limitation de courant (78) pendant un intervalle de temps prédéfini (fig. 5 : t1 à t2).

18. Moteur selon la revendication 17, dans lequel l'organe de temporisation (132, 164, 166), dans son état activé, modifie la constante de temps d'un circuit RC (144, 154, 156) associé au dispositif de commutation (90) de manière que, lorsque le moteur (4) est mis en marche, un courant est provoqué d'abord à travers l'enroulement de phase à basse résistance (26), lequel courant n'est pas limité par la limitation de courant (78) quand la limitation de courant est désactivée.

19. Moteur selon l'une des revendications 14 à 18, lequel présente un multivibrateur bistable (FF90) dont l'état de commutation est commandé par la tension qui est induite par le rotor (28) à aimant permanent dans l'enroulement de phase (25 ou 26) momentanément sans courant qui, dans la plage d'angle de rotation momentanée du rotor (28), n'est pas alimenté en courant via son commutateur à semi-conducteurs (68 ou 70) associé.

20. Moteur selon la revendication 19, dans lequel le multivibrateur (FF90) présente une entrée dominante (R) à laquelle, lorsque le moteur est mis en marche, est appliqué un signal de mise en marche qui provoque l'activation de l'enroulement de phase à basse résistance (26).

21. Moteur selon l'une des revendications 14 à 20, dans lequel l'enroulement de phase à basse résistance (26) qui est excité ou alimenté en courant lorsque le moteur est mis en marche est associé à au moins une position de rotation prédéfinie du rotor (28), que ce dernier occupe quand le moteur (4) n'est pas alimenté,
pour, par excitation de cet enroulement de phase à basse résistance (26), provoquer un démarrage du rotor (28) dans un sens de rotation désiré.

22. Moteur selon l'une ou plusieurs des revendications précédentes, dans lequel au moins un aimant permanent (8) est prévu sur le stator pour, quand le moteur n'est pas alimenté, tourner le rotor (14) dans une position de rotation prédéfinie ou dans l'une d'une pluralité de positions de rotation prédéfinies.

23. Moteur selon l'une ou plusieurs des revendications précédentes, lequel est couplé à une roue de ventilateur radial.
